# EUROPÄISCHE PATENTANMELDUNG

(11) **EP 3 385 159 A1**
(43) Veröffentlichungstag der Anmeldung: **10.10.2018**
(21) Anmeldenummer: 18166191.9
(22) Anmeldetag: 06.04.2018
(51) Int. Cl.: B63J 2/04, F24F 12/00, F24F 13/04

(54) **KLIMATISIERUNGSVORRICHTUNG, KLIMATISIERUNGSSYSTEM FÜR SCHIFFSKABINEN UND VERFAHREN ZUR KLIMATISIERUNG VON SCHIFFSKABINEN**

(30) Priorität: 07.04.2017 DE 102017107582; 03.11.2017 DE 102017125758
(71) Anmelder: EMCO Klima GmbH, 49811 Lingen/Ems (DE)
(72) Erfinder: WINKELHAUS, Matthias, 49808 Lingen (DE); BOLKENIUS, Frank, 48909 Lingen (DE)
(74) Vertreter: Kalkoff & Partner

(57) **Zusammenfassung**

Die Erfindung betrifft ein Klimatisierungssystem für Schiffskabinen, eine Klimatisierungsvorrichtung (30) und ein Verfahren zur Klimatisierung von Schiffskabinen (12). Eine Ansaugvorrichtung (12) ist zum Ansaugen von Außenluft (16) vorgesehen, die mittels einer Frischluft-Luftführung (32) durch eine Außenwand (14) zur Klimatisierungsvorrichtung (30) geführt wird. Die Klimatisierungsvorrichtung (30) ist zur Abgabe von Abluft durch eine Abluft-Abführung (18,20) verbunden, die entweder eine zentrale Abluft-Abführung (20) ist oder eine zu einer Ausblasvorrichtung (20) für Abluft auf der Außenseite führende Abluft-Abführung (18) durch die Außenwand (14). Die Klimatisierungsvorrichtung (30) weist eine erste Luft-Zuführung (38) für Luft (44) aus einem ersten Innenbereich (i2b) und eine zweite Luft-Zuführung für Luft (46) aus einem zweiten Innenbereich (12a) der Kabine (12) auf. Die Klimatisierungsvorrichtung (30) umfasst einen Luft-Wärmetauscher (60), der so angeschlossen ist, dass Wärme ausgetauscht wird zwischen einem ersten Luftstrom von der ersten Luft-Zuführung (38) zur Abluft-Abführung und einem zweiten Luftstrom von der Frischluft-Luftführung (32). Dabei ist die Klimatisierungsvorrichtung (30) so ausgebildet und angeschlossen, dass der zweite Luftstrom mit Luft aus der zweiten Luft-Zuführung gemischt und in den zweiten Innenbereich (12a) der Kabine (12) abgegeben wird.

## Beschreibung

Die Erfindung betrifft ein Klimatisierungssystem für Schiffskabinen, eine Klimatisierungsvorrichtung und ein Verfahren zur Klimatisierung von Schiffskabinen.

Die Klimatisierung von Schiffskabinen kann neben der Versorgung mit Frischluft und Abgabe der Abluft verschiedene Maßnahmen der Luftaufbereitung umfassen, insbesondere Filterung, Temperierung und Be- oder Entfeuchtung. Auf Schiffen mit einer Vielzahl von Schiffskabinen, bspw. auf Kreuzfahrtschiffen, wird zur Klimatisierung der Kabinen üblicherweise eine zentrale Klimatisierungsvorrichtung verwendet. Dort wird zentral für das gesamte Schiff Frischluft angesaugt, aufbereitet und über Leitungen innerhalb des Schiffs den Kabinen zugeführt. Abluft aus einer Vielzahl von Kabinen wird über eine Abluftleitung zu einer zentralen Abgabestelle geleitet und nach außerhalb des Schiffes abgegeben.

In der EP 2 048 449 A2 ist eine Klimaanlage, insbesondere für Schiffe, beschrieben mit einem zentralen Klimagerät als Luftzuführungseinrichtung. Über ein zentrales Gebläse gelangt die Luft durch einen Hauptkanal und hiervon abzweigende Zweigkanäle in die verschiedenen Kabinen. Eine dort angeordnete Luftzuführungseinrichtung ist als Induktionsgerät ausgebildet mit einem elektrischen Lufterhitzer zur Heizung der Kabine sowie einem Kühler zur Kühlung und Entfeuchtung.

Die EP 0 916 575 A2 beschreibt eine Klimaanlage für Schiffe zur Luftaufbereitung in Schiffskabinen. Luft von der Klimaanlage wird den Kabinen durch Versorgungsluftschächte zugeführt. In jeder Kabine ist eine Regelvorrichtung für die Luftmenge vorgesehen. Ein Luftzufuhr-Regler ist im Toilettenmodul der Kabine angeordnet und mit einer Kühlvorrichtung versehen. Eine Abluft-Mengen-Regelvorrichtung ist im Bereich der Schränke der Kabinen vorgesehen.

Die WO 1999/058399 beschreibt eine Ventilationsanordnung mit einer LuftAufbereitungseinheit, einer Tempereinheit und einem lokalen Luftkanal-System in jeder einzelnen Kabine. Eine Luftaufbereitungseinheit mit Öffnungen für Zuluft und Abluft ist an der Außenseite der Außenwand angeordnet. Ein Luftkanal erstreckt sich durch die Decke in die Kabine. Die Temperierungseinheit umfasst einen Ventilator zur Bereitstellung von Luft, der den Luftaustausch in der Kabine erledigt, aber auch als Umwälzventilator dient. Die Ventilationsanordnung kann verschiedene Mittel umfassen, die der Frischluftzufuhr, Abführung verbrauchter Luft, Filterung, Entfeuchtung, Wärmerückgewinnung, Tempern, Befeuchtung und Umwälzung dienen.

Es kann als Aufgabe der Erfindung angesehen werden, ein Klimatisierungssystem, eine Klimatisierungsvorrichtung und ein Verfahren zur Klimatisierung von Schiffskabinen vorzuschlagen, mit denen bei geringem baulichen Aufwand und Platzbedarf eine umfassende Klimatisierung von Schiffskabinen möglich ist.

Die Aufgabe wird gelöst durch ein Klimatisierungssystem gemäß Anspruch 1, eine Klimatisierungsvorrichtung gemäß Anspruch 7 und ein Verfahren zur Klimatisierung gemäß Anspruch 15. Abhängige Ansprüche beziehen sich auf vorteilhafte Ausführungsformen der Erfindung.

Bei dem erfindungsgemäßen Klimatisierungssystem und Verfahren zur Klimatisierung von Schiffskabinen ist erfindungsgemäß vorgesehen, dass Außenluft angesaugt und durch eine Frischluft-Luftführung durch eine Außenwand des Schiffs einer Klimatisierungsvorrichtung zugeführt wird. Bevorzugt kann für jede an der Außenwand des Schiffs angrenzende Kabine eine separate Ansaugvorrichtung vorgesehen sein, so dass zwischen den Kabinen verlaufende voluminöse Luftkanäle für die Frischluft-Luftführung nicht notwendig sind.

Für die Entsorgung von Abluft können verschiedene Konzepte genutzt werden. Gemäß einem ersten Konzept, das als vollständig dezentrale Klimatisierung bezeichnet werden kann, ist eine Abluft-Abführung zu einer Ausblasvorrichtung auf der Außenseite vorgesehen. Hierbei kann es sich um eine Abluft-Abführung für eine Mehrzahl von Kabinen handeln, bevorzugt ist allerdings für jede (Außen-)Kabine eine separate Abluft-Abführung und/oder Ausblasvorrichtung vorgesehen. Hierfür kann bevorzugt ein separater Luftkanal vorgesehen sein, mit dem eine Klimatisierungsvorrichtung im Schiffsinneren durch die Außenwand mit einer Ausblasvorrichtung auf der Außenseite verbunden wird.

Gemäß einem alternativen zweiten Konzept, das als gemischt dezentral/zentrale Klimatisierung bezeichnet werden kann, ist eine zentrale Abluft-Abführung vorgesehen, d. h. eine Mehrzahl von Kabinen sind hiermit verbunden, um Abluft durch die zentrale Abluft-Abführung abzugeben. Bevorzugt sind alle Kabinen des Schiffs oder zumindest alle Kabinen bestimmter Abschnitte des Schiffs mit derselben zentralen Abluft-Abführung verbunden, bspw. über Luftkanäle.

Die Kabine umfasst erfindungsgemäß mindestens zwei mindestens zum Teil voneinander getrennte Innenbereiche, die zwar (bspw. durch Türen, Durchgänge) miteinander verbunden sind, aber klimatechnisch als voneinander getrennt angesehen werden können. Während der zweite Innenbereich der Kabine bevorzugt ein (größerer) Hauptbereich ist, ist der erste Innenbereich bevorzugt eine hiervon abgetrennte Nasszelle.

Erfindungsgemäß ist in oder an der Schiffskabine eine Klimatisierungsvorrichtung vorgesehen, die zur Luftführung und Luft-Aufbereitung dienen kann. Hierbei handelt es sich bevorzugt um ein Klimagerät, in dem zumindest die von außen zugeführte Frischluft aufbereitet wird. Es ist bevorzugt, dass für die Mehrzahl von Kabinen die entsprechende Anzahl von Klimatisierungsvorrichtungen vorgesehen sind.

Die Klimatisierungsvorrichtung ist erfindungsgemäß mit der (zentralen oder dezentralen) Abluft-Abführung verbunden, so dass sie Abluft hierüber abgeben kann. Insbesondere im Fall der dezentralen Abluft-Abführung kann in oder verbunden mit der Abluft-Abführung bevorzugt ein Abluft-Gebläse vorgesehen sein. Weiter weist die Klimatisierungsvorrichtung eine erste Luft-Zuführung für Luft aus dem ersten Innenbereich und eine zweite Luft-Zuführung für Luft aus dem zweiten Innenbereich der Kabine auf. Schließlich ist die Klimatisierungsvorrichtung mit der Frischluft-Luftführung verbunden. Für die Verbindung mit den diversen Zu- und Abführungen können bevorzugt separate Luftkanäle vorgesehen sein.

Erfindungsgemäß weist die Klimatisierungsvorrichtung einen Luft-Wärmetauscher auf, der so angeschlossen ist, dass Wärme ausgetauscht werden kann zwischen einem ersten und einem zweiten Luftstrom. Davon führt der erste Luftstrom von der ersten Luft-Zuführung für Luft aus dem ersten Innenbereich (Nasszelle) zur (zentralen oder dezentralen) Abluft-Abführung. Der zweite Luftstrom stammt von der Frischluft-Luftführung und strömt in bzw. durch die Klimatisierungsvorrichtung oder zumindest einen Teil hiervon.

Durch den Luft-Wärmetauscher kann zumindest Wärme ausgetauscht werden zwischen dem ersten und dem zweiten Luftstrom. Der Luft-Wärmetauscher wird bevorzugt vom ersten und zweiten Luftstrom in geführten Strömungswegen durchströmt, die strömungstechnisch getrennt aber thermisch gekoppelt sind, so dass Wärme von einem Luftstrom in den anderen Luftstrom übergehen kann. Der Austausch von Wärme über den Luft-Wärmetauscher kann je nach Temperatur von Abluft und Frischluft in unterschiedliche Richtung erfolgen. Im Heizfall (die Abluft ist wärmer als die Frischluft) wird die Wärme der Abluft zur Vorwärmung der Frischluft genutzt. Im Kühlfall (Frischluft wärmer als Abluft) gibt die Frischluft bereits Wärme an die Abluft ab, wird also bereits vorgekühlt.

Die Klimatisierungsvorrichtung ist weiter so ausgebildet und angeschlossen, dass der zweite Luftstrom mit Luft aus der zweiten Luft-Zuführung (aus dem zweiten Innenbereich, üblicherweise dem Hauptbereich der Kabine) gemischt und in den zweiten Innenbereich (üblicherweise Hauptbereich) der Kabine abgegeben wird. So wird gleichzeitig eine Klimatisierung und Umwälzung der Luft in der Schiffskabine ermöglicht.

Durch Verwendung einer dezentralen Abluft-Abführung gemäß dem ersten, vollständig dezentralen Konzept einer Klimatisierung kann der bauliche Aufwand reduziert werden, da keine Luftkanäle zu einer zentralen Abluft-Abführung für mehrere oder sogar alle Kabinen erforderlich ist. Bei der zentralen Abluft-Abführung gemäß dem zweiten, gemischt dezentral/zentralen Klimatisierungskonzept kommt es nicht zu einer Belästigung durch eine Vielzahl von einzelnen Abluft-Abführungen an der Außenwand jeder einzelnen Kabine.

Die Verwendung eines Luft-Wärmetauschers hat sich als besonders einfache Möglichkeit für die Wärmerückgewinnung zwischen Frischluft und Abluft erwiesen. Insgesamt ermöglicht die beschriebene Luftführung des Klimatisierungssystems und des erfindungsgemäßen Verfahrens somit eine sowohl beim Bau als auch im Betrieb besonders effiziente Klimatisierung von Schiffskabinen.

Gemäß einer bevorzugten Ausführungsform des Klimatisierungssystems und des erfindungsgemäßen Verfahrens ist der zweite Innenbereich der Kabine der Hauptbereich und der erste Innenbereich eine hiervon abgetrennte Nasszelle. Die Nasszelle ist im Abstand von der Außenwand angeordnet und durch eine Innenwand von einem Gang getrennt, von dem eine Tür zum Hauptbereich der Kabine abgeht. Die Klimatisierungsvorrichtung kann besonders vorteilhaft im Bereich der Innenwand zwischen der Nasszelle und dem Gang angeordnet sein. Zur Frischluft-Zuführung kann ein Luftkanal vorgesehen sein, der von der Außenwand zur davon beabstandeten Klimatisierungsvorrichtung verläuft. Zur Abluft-Abführung kann - bei Anwendung innerhalb des ersten, vollständig dezentralen Klimatisierungskonzepts - ein Luftkanal vorgesehen sein, der von der Klimatisierungsvorrichtung zur Außenwand verläuft und diese bevorzugt durchdringt. Diese bevorzugte Anordnung der Klimatisierungsvorrichtung hat sich in mehrfacher Hinsicht als vorteilhaft erwiesen. Einerseits ist die räumliche Nähe zur Nasszelle günstig, um von dort auf kurzem Weg warme und meist feuchte Luft abzuführen. Andererseits ist die Anordnung in oder an der Innenwand deshalb besonders vorteilhaft, weil so eine Zugangsmöglichkeit vom Gang zumindest zu Teilen der Klimatisierungsvorrichtung geschaffen werden kann, ohne dass einer der Innenbereiche der Kabine hierfür betreten werden muss. So können gewisse Service-Arbeiten wie bspw. das Wechseln von Filtern etc. ohne Störung der Passagiere durchgeführt werden. Bspw. kann die Klimatisierungsvorrichtung eine vom Gang zugänglich abnehmbare Abdeckung aufweisen, so dass nach Entfernen der Abdeckung vom Gang aus Zugang zur Klimatisierungsvorrichtung möglich ist.

Gemäß einer Weiterbildung der Erfindung ist die zweite Luft-Zuführung als Luftkanal ausgebildet. Der Luftkanal kann bevorzugt am oder unter dem Boden des ersten und/oder des zweiten Kabinenbereichs der Kabine verlaufen. Bevorzugt ist ein Einlass gebildet im zweiten Innenbereich (Hauptbereich) der Kabine und der Luftkanal verläuft zwischen dem ersten und zweiten Innenbereich bis zur Klimatisierungsvorrichtung.

Gemäß einer Weiterbildung ist zur Abgabe des gemischten Luftstroms (zweiter Luftstrom von der Frischluft-Zuführung, gemischt mit Luft aus der zweiten Luft-Zuführung) in den zweiten Innenbereich der Kabine ein Luftkanal vorgesehen. Der Luftkanal kann sich bevorzugt an oder über der Decke des ersten und/oder des zweiten Innenbereichs der Kabine erstrecken. Bevorzugt ist der Luftkanal an einer Oberseite der Klimatisierungsvorrichtung angeschlossen und endet in einem oder mehreren Luftauslässen im zweiten Innenbereich (Hauptbereich) der Kabine, bspw. in einem oder mehreren Deckenauslässen.

Die gemäß Anspruch 7 vorgeschlagene Klimatisierungsvorrichtung ist insbesondere für das vorstehend beschriebene Klimatisierungssystem und Verfahren zur Klimatisierung von Schiffskabinen gut verwendbar. Sie kann alternativ aber auch in anders gestalteten Systemen verwendet werden und wird daher als eigenständiger Aspekt der Erfindung angesehen.

Die gemäß Anspruch 7 erfindungsgemäße Klimatisierungsvorrichtung weist eine Frischluft-Zuführung, eine Abluft-Abführung, sowie eine erste und zweite Luft-Zuführung und eine Zuluft-Abführung auf. Die Luft-Zuführungen bzw. Luft-Abführungen können mindestens zum Teil direkt als Öffnungen an der Klimatisierungsvorrichtung vorgesehen sein oder als Anschlüsse an Luftkanäle. Bei Verwendung innerhalb eines vollständig dezentralen Klimatisierungssystems ist bevorzugt ein Abluft-Gebläse vorgesehen, das über einen Luftkanal mit der Abluft-Abführung verbunden oder innerhalb der Klimatisierungsvorrichtung angeordnet sein kann. Bei Verwendung der Klimatisierungsvorrichtung innerhalb des zweiten, gemischt dezentral/zentralen Klimatisierungssystems kann bevorzugt eine Abluft-Gebläse an der Klimatisierungsvorrichtung entfallen, sofern die zentrale Abluft-Abführung einen Unterdruck erzeugt, bspw. durch ein zentrales Abluft-Gebläse und/oder durch Abluft-Gebläse in den innerhalb des Schiffs verlaufenden Luftkanäle. Wie vorstehend beschrieben ist bei der bevorzugten Verwendung im erfindungsgemäßen Klimatisierungssystem die Frischluft-Zuführung über den Luftkanal mit einer Außenluft-Ansaugvorrichtung verbunden und die Abluft-Abführung entweder mit einem Luftkanal zur zentralen Abluft-Abführung oder mit einer Ausblasvorrichtung für Ablauf auf der Außenseite. Die Zuluft-Abführung ist bevorzugt über einen Luftkanal verbunden mit dem zweiten Innenbereich der Kabine. Die erste Luft-Zuführung dient bevorzugt zur Zuführung von Luft aus dem ersten Innenbereich der Kabine und kann bspw. als direkte Einlassöffnung an der Klimatisierungsvorrichtung vorgesehen sein, bspw. seitlich oder oben an der Klimatisierungsvorrichtung, oder sie kann als Anschluss für einen Luftkanal ausgebildet sein. Die zweite Luft-Zuführung dient bevorzugt zur Zuführung von Luft aus dem zweiten Innenbereich der Kabine und kann als Anschluss für einen von dort verlaufenden Luftkanal ausgebildet sein.

Die erfindungsgemäße Klimatisierungsvorrichtung weist einen Luft-Wärmetauscher auf, mit dem zumindest Wärme ausgetauscht werden kann zwischen einem ersten Luftstrom von der ersten Luft-Zuführung zur Abluft-Abführung und einem zweiten Luftstrom von der Frischluft-Zuführung. Die Klimatisierungsvorrichtung weist weiter einen Mischbereich auf, in dem der zweite Luftstrom mit Luft aus der zweiten Luft-Zuführung gemischt und über die Zuluft-Abführung abgegeben wird.

Somit ermöglicht die Klimatisierungsvorrichtung zumindest eine Wärmerückgewinnung zwischen abzuführender Abluft und zugeführter Frischluft. Gleichzeitig ermöglicht sie eine Umwälzung durch die Mischung des zweiten Luftstroms mit Luft aus der zweiten Luft-Zuführung.

Gemäß einer Weiterbildung der Erfindung ist der Luft-Wärmetauscher ausgebildet zum Austausch von Wärme und Feuchtigkeit zwischen dem ersten und dem zweiten Luftstrom. Dies ist bspw. möglich, indem innerhalb des Wärmetauschers der erste und der zweite Luftstrom durch eine mindestens teilweise feuchtigkeitsdurchlässige Membran getrennt voneinander geführt werden. Mit Hilfe eines Luft-Wärmetauschers, der neben dem Austausch von Wärme auch den Übergang von Feuchtigkeit zwischen den dadurch geführten Luftströmen ermöglicht, kann Feuchtigkeit übergehen von einem Luftstrom mit höherem Feuchtigkeitsgehalt zu einem Luftstrom mit geringerem Feuchtigkeitsgehalt. Besondere Vorteile hat dies bspw., wenn der zweite Luftstrom (bspw. zugeführte Frischluft) einen höheren Feuchtigkeitsgehalt aufweist als der erste Luftstrom (bspw. zur Abführung vorgesehene Luft aus der ersten Luft-Zuführung). Dann kann der Luft-Wärmetauscher bereits eine gewisse Reduktion des Feuchtegehalts der Frischluft bewirken. Auch im umgekehrten Fall von sehr trockener Frischluft kann es sinnvoll sein, wenn diese durch den Luft-Wärmetauscher befeuchtet wird.

Als Luft-Wärmetauscher mit der Möglichkeit des zusätzlichen Austausches von Feuchtigkeit wird eine Bauweise bevorzugt, bei der die beiden Luftströme gegenläufig durch flache Kanalsegmente strömen. Dabei können Kanalsegmente für den ersten und den zweiten Luftstrom in Querrichtung abwechselnd angeordnet und jeweils voneinander durch dünne, flächige Membranen von bspw. ebener Form getrennt sein.

Gemäß einer Weiterbildung der erfindungsgemäßen Klimatisierungsvorrichtung weist diese ein erstes Gebläse zur Förderung des zweiten Luftstroms und ein zweites Gebläse zur Förderung der Zuluft auf. Das erste und das zweite Gebläse sind dabei in Reihe zueinander angeordnet. Bevorzugt fördert das erste Gebläse in Richtung des zweiten Gebläses. Weiter bevorzugt ist die Förderrate des zweiten Gebläses größer als die Förderrate des ersten Gebläses. Besonders bevorzugt ist zwischen dem ersten und dem zweiten Gebläse eine Verbindung zur zweiten Luft-Zuführung vorgesehen, so dass sich aus der Differenz der Förderraten dort ein Sog ergibt. So kann eine Mischung des zweiten Luftstroms (bevorzugt Frischluft nach Durchgang durch den Luft-Wärmetauscher) mit Luft aus der zweiten Luft-Zuführung (bevorzugt aus dem zweiten Innenbereich der Kabine angesaugte Luft) erfolgen.

Gemäß einer Weiterbildung der Erfindung kann eine Kühleinheit zur Kühlung des Misch-Luftstroms aus dem zweiten Luftstrom und der Luft aus der zweiten Luft-Zuführung vorgesehen sein. Während hier im Prinzip verschiedene Typen von Kühleinheiten verwendet werden können, wird eine Kühleinheit mit einem Wärmetauscher mit flüssigkeitsdurchflossenen Leitungsabschnitten bevorzugt, die im Misch-Luftstrom angeordnet sind. Mittels einer geeigneten Kühlflüssigkeit kann mit dem so gebildeten Wärmetauscher eine Kühlung des Misch-Luftstroms und durch Kondensation gleichzeitig eine Entfeuchtung erfolgen.

Bevorzugt kann die Kühleinheit ein oder mehrere Kühlregister aufweisen, die im Luftstrom angeordnet sind. Jedes Kühlregister weist eine Mehrzahl von parallel angeordneten Leitungsabschnitten auf, wobei die Leitungsabschnitte bevorzugt in einer gemeinsamen Ebene oder in mehreren gemeinsamen parallelen Ebenen angeordnet sind. Weiter bevorzugt sind die Leitungsabschnitte eines Kühlregisters bspw. endseitig miteinander verbunden, so dass zwei oder mehr der Leitungsabschnitte eine durchgehende Leitung für die Kühlflüssigkeit bilden. Besonders bevorzugt sind alle Leitungsabschnitte des Kühlregisters zu einer gemeinsamen Leitung verbunden und strömungstechnisch in Reihe angeordnet. Die Leitungsabschnitte können zur Bildung des Kühlregisters durch eine Halterung relativ zueinander gehalten werden. Bevorzugt kann eine Halterung die parallelen Leitungsabschnitte mindestens an einem Ende verbinden, weiter bevorzugt sind die Leitungsabschnitte an gegenüberliegenden Enden jeweils aneinander gehalten.

Zur besonders platzsparenden Anordnung einer Kühleinheit mit hoher Kühlwirkung können mehrere Kühlregister hintereinander im Misch-Luftstrom angeordnet sein. Dabei können die Leitungsabschnitte jedes Kühlregisters jeweils in gemeinsamen Ebenen angeordnet sein. Die Kühlregister sind bevorzugt quer in einem vom Misch-Luftstrom durchströmten Bereich angeordnet. Besonders bevorzugt ist dabei eine zur Strömungsrichtung des Misch-Luftstroms schräge Anordnung, so dass bspw. die von den Kühlregistern gebildeten Ebenen zueinander parallel angeordnet sind und z. B. zur Strömungsrichtung einen Winkel von 20 bis 80°, bevorzugt 35 bis 65°, besonders bevorzugt 40 bis 60° aufweisen.

Weiter ist es bevorzugt, dass die Kühleinheit flüssigkeitsdurchflossene Leitungsabschnitte aufweist, die so verbunden und angeordnet sind, dass sie vom Kühlmedium im Gegenstrom zum Misch-Luftstrom durchströmt werden.

Nachfolgend werden Ausführungsformen anhand von Zeichnungen näher beschrieben. Dabei zeigen:
- Fig. 1: eine schematische Darstellung einer ersten Ausführungsform eines Schiffs mit Schiffskabinen und einer Klimatisierung gemäß einem ersten Klimatisierungskonzept mit dezentraler Abluft-Abführung;
- Fig. 2: ein schematischer Grundriss einer Schiffskabine des Schiffs aus Fig. 1 mit einer ersten Ausführungsform einer Klimatisierungsvorrichtung;
- Fig. 3: in Draufsicht die Klimatisierungsvorrichtung aus Fig. 2;
- Fig. 4: in perspektivischer Ansicht die Klimatisierungsvorrichtung aus Fig. 2, Fig. 3;
- Fig. 5: in Seitenansicht die Klimatisierungsvorrichtung aus Fig. 2 bis 4 ohne Abdeckung;
- Fig. 6: eine schematische Darstellung der Funktionsweise der Klimatisierungsvorrichtung aus Fig. 3-5;
- Fig. 7: in perspektivischer Darstellung einen Luft-Wärmetauscher der Klimatisierungsvorrichtung aus Fig. 5;
- Fig. 7a: eine Längsschnittdarstellung entlang der Linie A.A in Fig. 7;
- Fig. 8: eine Längsschnittdarstellung eines Teils der Klimatisierungsvorrichtung aus Fig. 5 mit einer Kühleinheit;
- Fig. 9: eine perspektivische Darstellung der Kühleinheit aus Fig. 8
- Fig. 10: eine schematische Darstellung einer zweiten Ausführungsform eines Schiffs mit Schiffskabinen und einer Klimatisierung gemäß einem zweiten Klimatisierungskonzept mit zentraler Abluft-Abführung;
- Fig. 11: ein schematischer Grundriss einer Schiffskabine des Schiffs aus Fig. 10 mit einer zweiten Ausführungsform einer Klimatisierungsvorrichtung;
- Fig. 12: in Draufsicht die Klimatisierungsvorrichtung aus Fig. 11;
- Fig. 13: in perspektivischer Ansicht die Klimatisierungsvorrichtung aus Fig. 11, Fig. 12;
- Fig. 14: in Seitenansicht die Klimatisierungsvorrichtung aus Fig. 11 - 13 ohne Abdeckung;
- Fig. 15: eine schematische Darstellung der Funktionsweise der Klimatisierungsvorrichtung aus Fig. 11-14.

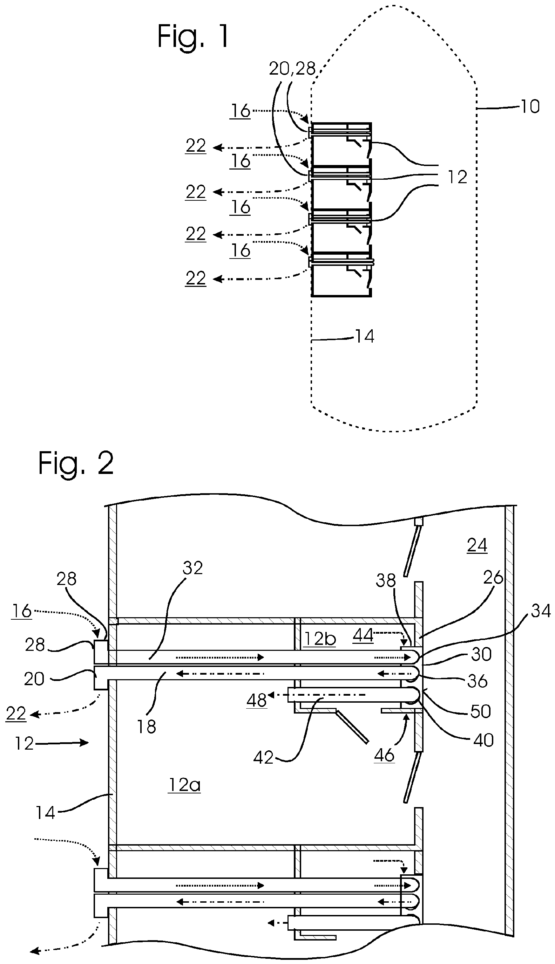

In Fig. 1 ist schematisch eine erste Ausführungsform eines Schiffs 10 dargestellt mit einer Anzahl von nebeneinander angeordneten, jeweils gleich ausgebildeten Außenkabinen 12 entlang einer äußeren Seitenwand 14 des Schiffs 10.

Schematisch sind in den nachfolgenden Figuren Luftflüsse jeweils durch Pfeile an verschiedenen Linienarten dargestellt. Dabei wird von außen angesaugte Frischluft durch gepunktete Linien dargestellt. Nach außen abgegebene Ablauft wird durch Strich-Doppelpunkt-Linien dargestellt.

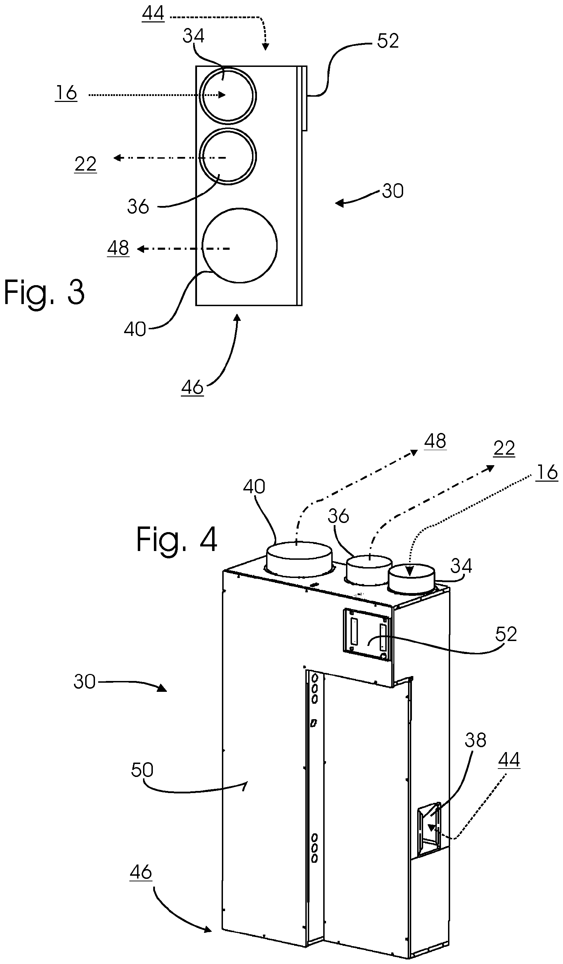

Wie in Fig. 1 gezeigt wird Frischluft 16 von außen durch die Außenwand 14 des Schiffs 10 den Kabinen 12 zugeführt. Luft aus jeder der Kabinen 12 wird durch Ausblasvorrichtungen 20 als Abluft 22 nach außen abgegeben. Bei der in Fig. 1, 2 gezeigten ersten Ausführungsform eines Schiffs 10 und der zugehörigen in Fig. 3 - 6 dargestellten ersten Ausführungsform einer Klimatisierungsvorrichtung handelt es sich um die Realisierung eines ersten Klimatisierungskonzepts mit dezentraler Abluft-Abführung, d.h. es erfolgt keine Zusammenführung des Abluftstroms aus allen Kabinen 12 oder auch nur allen Kabinen 12 eines größeren Abschnitts, sondern jeder Außenkabine 12 ist eine dedizierte, direkt daneben auf der Außenwand 14 angeordnete Ausblasvorrichtung 20 zugeordnet.

Fig. 2 zeigt den Grundriss einer Kabine 12 innerhalb einer Reihe von identisch aufgebauten Kabinen entlang der Außenwand 14, die alle von einem in Längsrichtung des Schiffs 10 verlaufenden Gang 24 aus begehbar sind.

Jede Kabine 12 umfasst einen Hauptbereich 12a und eine hiervon abgetrennte Nasszelle 12b. Die Nasszelle 12b ist im Inneren des Schiffs 10 im Abstand von der Außenwand 14 angeordnet und durch eine Innenwand 26 vom Gang 24 getrennt. In der Innenwand 26 zwischen der Nasszelle 12b der Kabine 12 und dem Gang 24 ist eine Klimatisierungsvorrichtung 30 angeordnet, die nachfolgend näher beschrieben wird.

Außen am Schiff 10 ist für jede Kabine 12 eine Ansaugvorrichtung 28 für Außenluft 16 vorgesehen. Diese wird durch einen oberhalb der Kabinendecke verlaufenden Luftkanal 32 als Frischluft-Luftführung der Klimatisierungsvorrichtung 30 an einem Frischluft-Anschluss 34 zugeführt (gepunktete Linien).

Weiter ist außen am Schiff für jede Kabine 12 eine Ausblasvorrichtung 20 für Abluft 32 vorgesehen. Hierfür ist ein weiterer oberhalb der Kabinendecke verlaufender Luftkanal 18 vorgesehen, so dass Abluft 32 (Strich-Doppelpunkt-Linien) von einem Abluft-Anschluss 36 der Klimatisierungsvorrichtung 30 zur Ausblasvorrichtung 20 geführt wird.

Dabei sind die Ausblasvorrichtung 20 und die Ansaugvorrichtung 28 auf der Außenwand 14 so angeordnet, dass strömungstechnisch ein Kurzschluss ausgeschlossen wird, bspw. durch eine Anordnung mit hinreichendem Abstand oder durch eine geeignete Trennung (nicht dargestellt).

Luft 44 aus der Nasszelle 12b (dargestellt als gestrichelte Linie) wird über eine erste Luft-Zuführung 38 direkt an der Klimatisierungsvorrichtung 30 dieser zugeführt. Aus dem Hauptbereich 12a der Kabine 12 wird Sekundärluft 46 (dargestellt mit durchgezogener Linie) ebenfalls der Klimatisierungsvorrichtung 30 zugeführt, bevorzugt durch einen Bodeneinlass und einen unter dem Boden vom Hauptbereich 12a in die Nasszelle 12b verlaufenden Luftkanal zur Klimatisierungsvorrichtung 30 (nicht dargestellt).

Die Klimatisierungsvorrichtung 30 gibt Luft 48 (dargestellt als strichpunktierte Linie) in den Hauptbereich 12a der Kabine 12 ab durch einen Anschluss 40 und daran angeschlossenen Luftkanal 42 in der Decke, der von der Nasszelle 12b in den Hauptbereich 12a führt und dort in einen Deckenauslass (nicht dargestellt) mündet. Bei der abgegebenen Luft 48 handelt es sich, wie nachfolgend erläutert wird, um mit Frischluft gemischte Sekundärluft.

Wie dargestellt ist die Klimatisierungsvorrichtung 30 innerhalb der Innenwand 26, also zwischen dem Gang 24 und der Nasszelle 12b angeordnet, so kann Luft 44 aus der Nasszelle 12b direkt über den Einlass 38 der Klimatisierungsvorrichtung 30 abgesaugt werden.

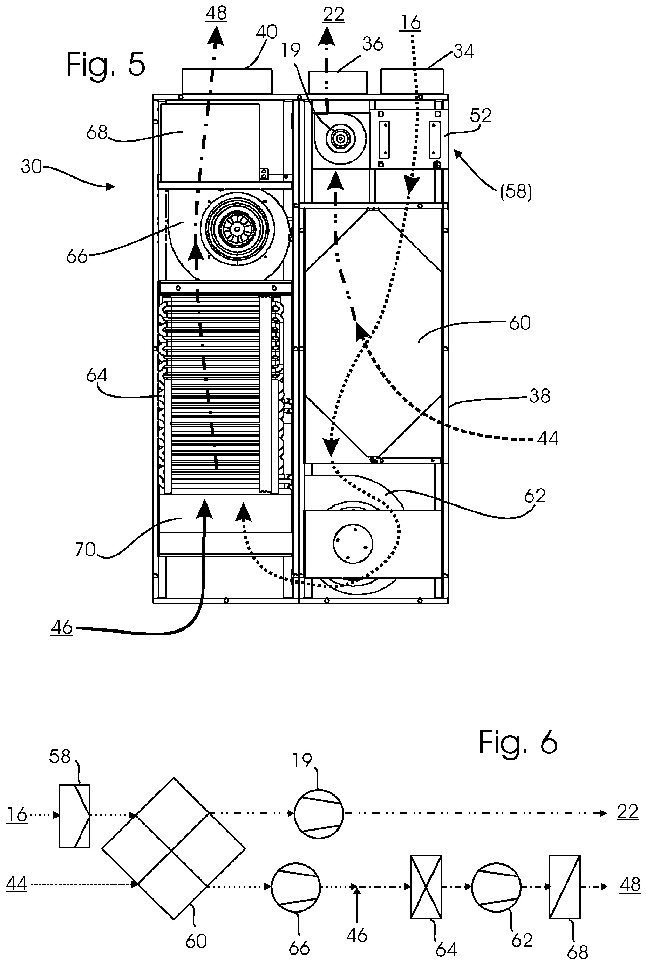

Gleichzeitig ist die in Fig. 4 vorne dargestellte Rückseite 50 der Klimatisierungsvorrichtung vom Gang 24 aus zugänglich (jedenfalls nach Entfernung einer Abdeckung, die hier nicht dargestellt ist). So kann insbesondere vom Gang 24 aus die an der Rückseite 50 der Klimatisierungsvorrichtung 30 angeordnete Klappe 52 (Fig. 4) geöffnet werden, um einen dahinter liegenden Filter 58 (s. Fig. 6) zu tauschen.

Fig. 5 zeigt eine Seitenansicht der Klimatisierungsvorrichtung 30 mit entfernter rückseitiger Abdeckung. Die Komponenten der Klimatisierungsvorrichtung 30 sowie die Luftflüsse dazwischen sind auch im Diagramm Fig. 6 noch einmal schematisch dargestellt.

Wie in Fig. 5, Fig. 6 gezeigt, verfügt die Klimatisierungsvorrichtung 30 neben den Luftzuführungen und -abführungen 34, 36, 38, 40, 46 über einen (in Fig. 5 hinter der Klappe 52 verborgenen) Filter 58, einen Luftwärmetauscher 60, ein erstes Gebläse 62, eine Kühleinheit 64, ein zweites Gebläse 66, ein Abluftgebläse 19 und einen Elektroheizer 68. Diese sind in einem Gehäuse untergebracht, das wie aus Fig. 5 ersichtlich durch eine mittlere Wand in zwei separate Kammern getrennt ist. Die Kammern sind bis auf die dargestellten Zu- und Abführungen allseitig geschlossen.

In der in Fig. 5 rechts dargestellten Kammer wird ein Luftstrom von oben nach unten geführt. Wie aus Fig. 5, Fig. 6 ersichtlich wird Luft 44 aus der Nasszelle 12b (gestrichelte Linie) durch die erste Luft-Zuführung 38 angesaugt und als erster Luftstrom durch den Luft-Wärmetauscher 60 geführt. Der erste Luftstrom wird nach Durchgang durch den Luft-Wärmetauscher 60 als Abluft 22 (Doppelpunkt-Strichlinie) mittels des Abluftgebläses 19 durch den Abluft-Anschluss 36 über den Luftkanal 18 zur Ausblasvorrichtung 20 nach Außen abgeführt.

Frischluft 16 (gepunktete Linie) wird durch den Frischluft-Anschluss 34 zunächst durch den Filter 58 geführt. Mittels des Filters 58 werden Stäube und Schwebstoffe aus dem Luftstrom 34 abgeschieden. Dabei hält der Filter 58 auch Salz aus dem Luftstrom 34 zurück.

Die so gefilterte Frischluft wird als zweiter Luftstrom durch den Luft-Wärmetauscher 60 geführt. Nach Durchgang durch den Luft-Wärmetauscher 60 wird die Zuluft durch das erste Gebläse 62 von der rechten Kammer in eine in Fig. 5 links dargestellte Mischkammer gefördert, wo sie sich mit Sekundärluft 46 aus dem Hauptbereich 12a der Kabine 12 mischt.

Der gemischte Luftstrom wird in der linken Kammer von unten nach oben durch die Kühleinheit 64 geführt und dort gekühlt und dabei durch Kondensation entfeuchtet. Nachfolgend wird der so gekühlte und entfeuchtete Luftstrom durch das zweite Gebläse 66 weiter gefördert, bei Bedarf durch die Heizvorrichtung 68 erwärmt und durch den Anschluss 40 als Zuluft 48 in den Hauptbereich 12a der Kabine 12 abgegeben.

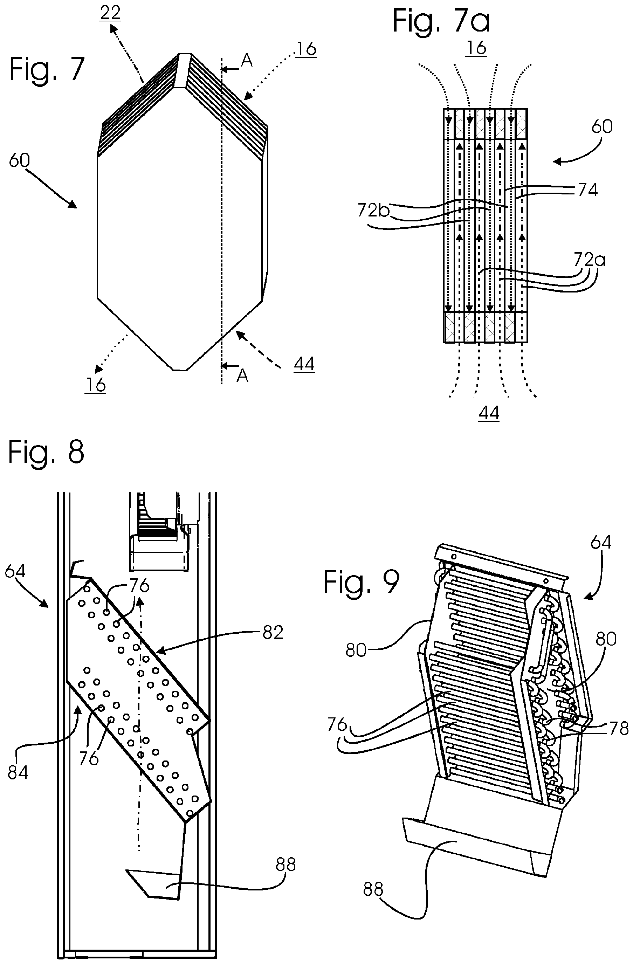

Mittels des Luft-Wärmetauschers 60, der in Fig. 7, Fig. 7a noch einmal näher dargestellt ist, wird zwischen dem ersten und zweiten Luftstrom, die den Wärmetauscher 60 gegenläufig durchqueren, sowohl Wärme als auch Feuchtigkeit ausgetauscht. Wie aus den zeichnerischen Darstellungen ersichtlich ist, weist der Luft-Wärmetauscher 60 in Querrichtung nebeneinander angeordnete flache Kammern 72a, 72b auf, wobei jeweils erste Kammern 72a vom ersten Luftstrom und zweite Kammern 72b gegenläufig vom zweiten Luftstrom durchströmt werden. Die ersten und zweiten Kammern 72a, 72b sind alternierend angeordnet und jeweils durch dünne Membranen 74 voneinander getrennt, so dass zwischen dem ersten und dem zweiten Luftstrom ein Wärmeaustausch sowie bei Durchgang von Feuchtigkeit durch die Membran 74 auch ein Feuchtigkeitsaustausch erfolgt.

Fig. 8, Fig. 9 zeigen die Kühlvorrichtung 64. Wie aus den zeichnerischen Darstellungen ersichtlich handelt es sich um eine Flüssigkeitskühlung mit jeweils parallelen Leitungsabschnitten 76, die quer zu der gezeigten Strömungsrichtung der Luft (strichpunktierter Pfeil) verlaufen. Die Leitungsabschnitte 76 sind paarweise wie insbesondere aus Fig. 9 ersichtlich ist endseitig durch U-Stücke 78 gekoppelt, so dass sie strömungstechnisch alle in Reihe angeordnet sind und somit eine durchgehende Leitung bilden, durch die eine Kühlflüssigkeit strömt.

Dabei sind wie aus Fig. 8, Fig. 9 ersichtlich ist die Leitungsabschnitte 76 an beiden Enden durch Haltebleche 80 so fixiert, dass sie zwei separate Kühlregister 82, 84 bilden. Jedes Kühlregister 82, 84 weist in zwei parallelen Ebenen angeordnete Leitungsabschnitte 76 auf.

Die Kühlregister 82, 84 sind, wie aus Fig. 8 ersichtlich ist, parallel zueinander angeordnet, so dass sie nacheinander vom Luftstrom durchströmt werden.

Um bei geringer Baugröße eine effiziente Kühlung zu ermöglichen, sind die Kühlregister 82, 84 dabei schräg innerhalb des durch die Wandung der Klimatisierungsvorrichtung 30 geführten Luftstroms angeordnet, und zwar im dargestellten Beispiel unter einem Winkel von ca. 40° zur Senkrechten.

Unterhalb der Kühlregister 82, 84 weist die Kühlvorrichtung 64 eine Kondensat-Sammelrinne 88 auf, in der kondensierende Feuchtigkeit aufgefangen und abgeführt wird.

Im Betrieb der Klimatisierungsvorrichtung 30 werden die Gebläse 62, 66 betrieben, um den Luftstrom jeweils in der dargestellten Richtung zu fördern. Die Leitungsabschnitte 76 der Kühlvorrichtung 64 werden durch Kühlflüssigkeit einer Temperatur von bspw. 6° C durchströmt.

Wie aus Fig. 5, Fig. 6 ersichtlich sind dabei das erste Gebläse 62 und zweite Gebläse 66 in Reihe geschaltet. Das zweite Gebläse 66 hat eine höhere Förderrate als das erste Gebläse 62. So ergibt sich ein Sog in der Mischkammer 70, durch den die Sekundärluft 46 aus dem Hauptbereich 12a der Kabine 12 angesaugt wird.

Im Kühlfall (d. h. bei warmer, meist feuchter Außenluft 16 von bspw. 30° C) und bei einer angestrebten Innentemperatur von bspw. 22° C innerhalb des Hauptbereichs 12a der Kabine 12 ergibt sich die folgende Funktion:
Während die Außenluft 16 durch das Gebläse 62 angesaugt wird, wird durch das Abluftgebläse 19 Luft 44 aus der Nasszelle 12b angesaugt und als Abluft 22 abgegeben. Dabei gibt die warme, feuchte Zuluft 16 Wärme sowie einen Teil der enthaltenen Feuchtigkeit innerhalb des Luft-Wärmetauschers 60 an die Abluft 22 ab, wird also gekühlt und entfeuchtet.

Nach Mischung mit der Sekundärluft 46 aus dem Hauptbereich 12a der Kabine 12 wird der gemischte Luftstrom durch die Kühlvorrichtung 64 bis auf eine Temperatur von bspw. 16° C gekühlt, so dass der größte Teil der enthaltenen Feuchtigkeit kondensiert. Durch die Heizvorrichtung 68 wird der entfeuchtete Misch-Luftstrom auf die gewünschte Innentemperatur von bspw. 22° C erwärmt und durch den Anschluss 48 in den Hauptbereich 12a der Kabine 12 abgegeben.

In einem beispielhaften Heizfall wird Außenluft 16 mit beispielsweise 5° C und geringer Luftfeuchtigkeit angesaugt. Durch den Luft-Wärmetauscher 60 wird die Zuluft 16 durch Wärme aus dem Abluftstrom 44, 22 vorerwärmt. Gleichzeitig wird dabei die Frischluft 16 befeuchtet. Sofern keine Entfeuchtung notwendig ist, muss die Kühlvorrichtung 64 im Heizfall nicht betrieben werden. Der gemischte Luftstrom wird dann durch die Heizvorrichtung 68 auf die gewünschte Temperatur erwärmt und über den Anschluss 40 in den Innenbereich 12a abgegeben.

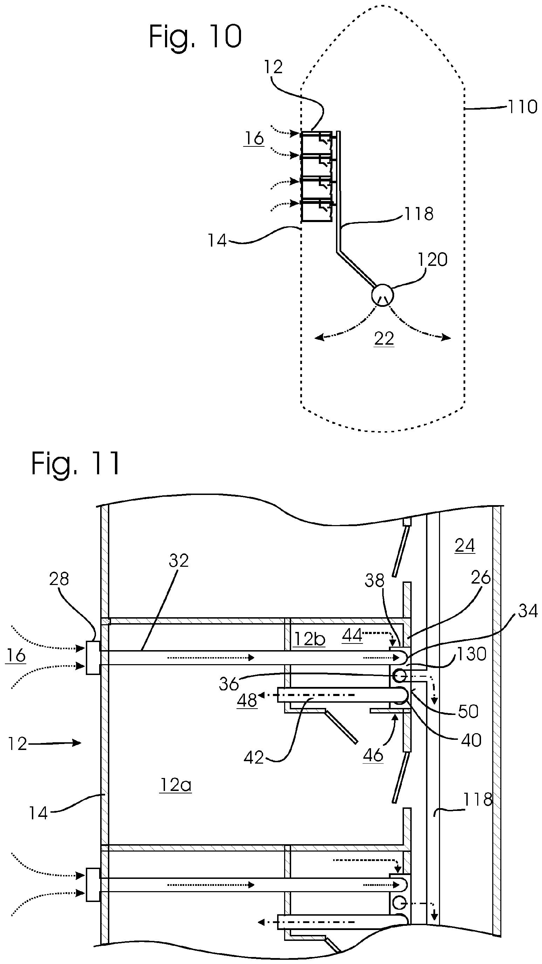

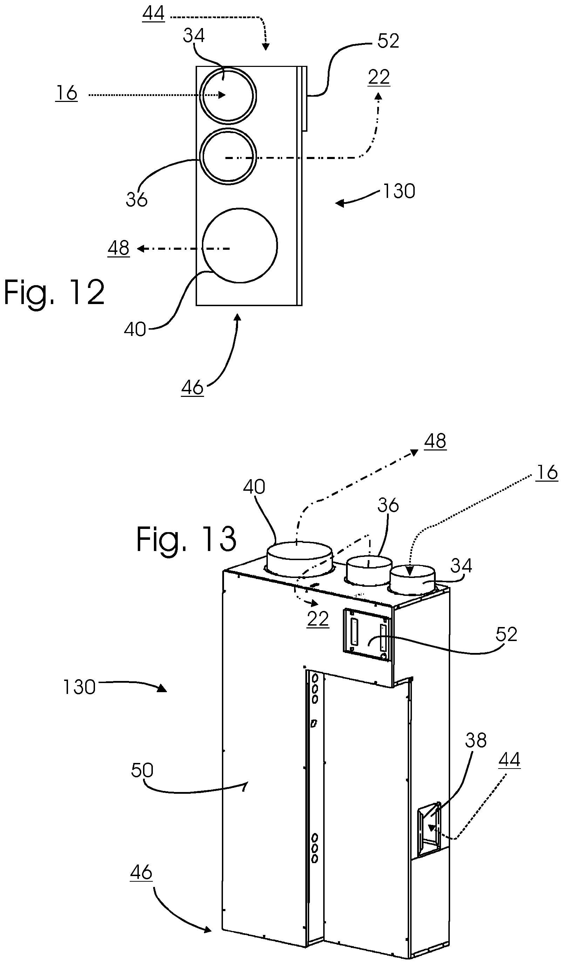

In Fig. 10 ist schematisch eine zweite Ausführungsform eines Schiffs 110 dargestellt. Fig. 11 zeigt eine Kabine 12 des Schiffs 110 und Fig. 12 - 15 zeigen eine zugehörige zweite Ausführungsform einer Klimatisierungsvorrichtung 130. Dabei handelt es sich um die Realisierung eines zweiten Klimatisierungskonzepts mit dezentraler Frischluft-Zufuhr bei zentraler Abluft-Abführung.

Wie für den Fachmann ersichtlich sein wird, bestehen weitgehende Übereinstimmungen zwischen den Ausführungsformen. Im Folgenden wird lediglich auf die Unterschiede eingegangen. Dabei sind identische oder weitgehend identische Elemente in beiden Ausführungsformen mit identischen Bezugszeichen gekennzeichnet.

Bei beiden Ausführungsformen von Schiffen 10, 110 wird jeweils Frischluft 16 dezentral von außen durch die Außenwand 14 des Schiffs 10 den Kabinen 12 zugeführt. Im Unterschied zum Schiff 10 gemäß der ersten Ausführungsform wird bei dem Schiff 110 gemäß der zweiten Ausführungsform allerdings Luft aus allen Kabinen 12 (oder in alternativen Ausführungen zumindest aus einem größeren Abschnitt mehrerer Kabinen 12, bspw. allen Kabinen auf einer Schiffsseite) über einen innerhalb des Schiffs 110 verlaufenden Luftkanal 118 zu einer zentralen Abluft-Abführung 120 geführt und dort zentral als Abluft 22 nach außen abgegeben.

Der Grundriss der einzelnen Kabinen 12 beim Schiff 110 gemäß der zweiten Ausführungsform stimmt wie in Fig. 11 gezeigt mit dem Grundriss gemäß Fig. 2 überein. Lediglich oberhalb des Gangs 24 verläuft der Abluftkanal 118 zur zentralen Abluft-Abführung 120.

In der Innenwand 26 zwischen der Nasszelle 12b der Kabine 12 und dem Gang 24 ist eine von der ersten Ausführung der Klimatisierungsvorrichtung 30 leicht abweichende Klimatisierungsvorrichtung 130 gemäß der zweiten Ausführung vorgesehen. Zudem entfällt bei dem realisierten dezentral/zentralen Belüftungskonzept die zentrale Abluft-Abführung 20 durch die Außenwand 14 unmittelbar an der Kabine 12. Stattdessen ist die Klimatisierungsvorrichtung 130 über ihren Abluft-Anschluss 36 mit dem Luftkanal 118 zur zentralen Abluft-Abführung 120 verbunden, um hierüber Abluft (Strich-Doppelpunkt-Linie) abzugeben. Ein Fördergebläse für die Abluft 22 ist im Bereich des Luftkanals 118 und /oder der zentralen Abluft-Abführung 120 vorgesehen.

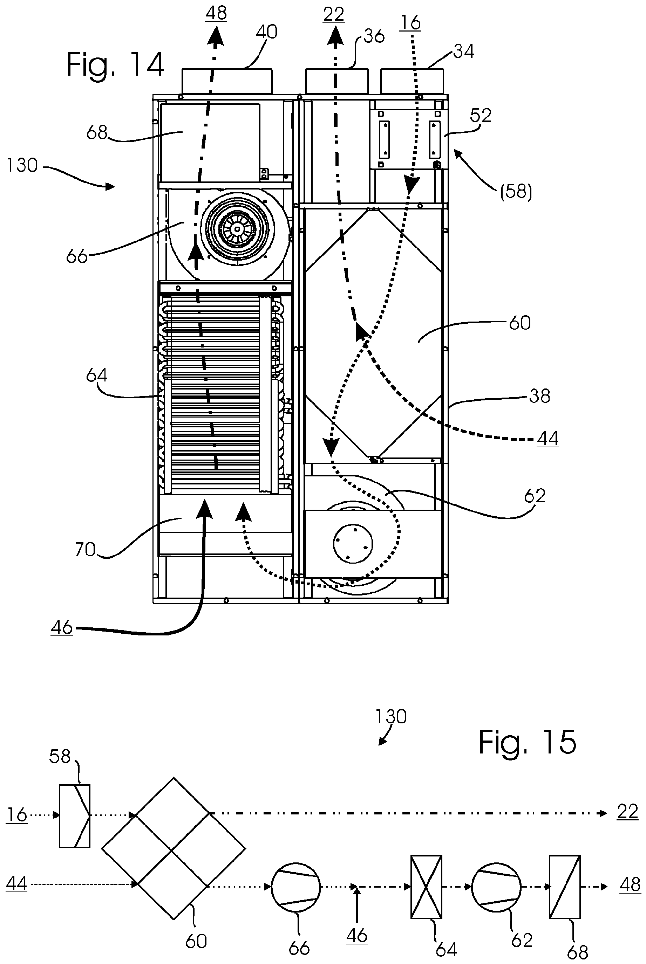

Dementsprechend kann die Klimatisierungsvorrichtung 130 gemäß der zweiten Ausführungsform, die im Übrigen mit der Klimatisierungsvorrichtung 30 gemäß der ersten Ausführungsform übereinstimmt und auch abgesehen vom Abluft-Anschluss 36 gleich angeschlossen ist, wie in der offenen Darstellung in Fig. 14 sichtbar ohne ein Abluftgebläse ausgeführt sein.

Die übrigen Einzelkomponenten der Klimatisierungsvorrichtung 130, können bei beiden Ausführungen übereinstimmen. Insbesondere können Luft-Wärmetauscher 60 und die Kühlvorrichtung 64 wie in Fig. 7-9 gezeigt ausgebildet sein.

In der Funktion stimmen die beiden Ausführungen ebenfalls überein mit dem einzigen Unterschied, dass bei der zweiten Ausführungsform die Abluft 22 zentral statt wie in der ersten Ausführungsform dezentral abgeführt wird.

Durch die gezeigten Ausführungsformen können auf einem Schiff somit verschiedene Klimatisierungskonzepte verwendet werden, d.h. insbesondere ein vollständig dezentrales Klimatisierungskonzept und ein dezentral/zentrales Klimatisierungskonzept.

Hierdurch ergibt sich gegenüber herkömmlichen rein zentralen Konzepten eine erhöhte Flexibilität in der Auslegung. Durch den teilweisen oder gar vollständigen Wegfall von zentralen Einrichtungen wie einer zentralen Frischluft-Ansaugung oder einer zentralen Abluft-Abfuhr entfallen auch die sonst benötigten Luftkanäle innerhalb des Schiffs, was zu erheblicher Platzersparnis führt.

Dabei sind die gezeigten Ausführungsformen, insbesondere die Klimatisierungsvorrichtungen 30, 130 beispielhaft und nicht beschränkend zu verstehen. Die einzelnen Details und Ausführungen können auch anders kombiniert werden.

Beispielsweise ist bei den Klimatisierungsvorrichtungen 30, 130 wie in Fig. 3-5, 12 - 15 gezeigt die erste Luft-Zuführung 38 jeweils seitlich an der Klimatisierungsvorrichtung 30 angeordnet. Diese Anordnung ist günstig gewählt, um ohne weitere Luftverteilung innerhalb des Gehäuses der Klimatisierungsvorrichtung 30 die Luft 44 aus der Nasszelle 12b im Gegenstrom zur Frischluft 16 durch den Luft-Wärmetauscher 60 zu führen. In alternativen Ausführungen kann allerdings die erste Luft-Zuführung 38 stattdessen ebenso wie die weiteren Anschlüsse 34, 36, 40, 46 an der Oberseite der Klimatisierungsvorrichtung 30 angeordnet sein. Bevorzugt wird dennoch die Luftführung wie aus Fig.5 und Fig. 14 ersichtlich beibehalten, d.h. im Fall der Anordnung der ersten Luft-Zuführung 38 oben an der Klimatisierungsvorrichtung 30, 130 ist bevorzugt innerhalb des Gehäuses ein Luftkanal von dort bis zur Unterseite des Luft-Wärmetauschers 60 vorgesehen, um die Luft 44 von der ersten Luft-Zuführung 38 dorthin zu führen.

## Patentansprüche

1. Klimatisierungssystem für Schiffskabinen (12), mit
- einer Ansaugvorrichtung (28) für Außenluft (16) und einer Frischluft-Zuführung (32, 34) durch eine Außenwand (14) zu einer Klimatisierungsvorrichtung (30
- wobei die Klimatisierungsvorrichtung (30) mit einer Abluft-Abführung (18, 20) verbunden ist und eine erste Luft-Zuführung (38) für Luft aus einem ersten Innenbereich (12b) und eine zweite Luft-Zuführung für Luft aus einem zweiten Innenbereich (12a) der Kabine (12) aufweist,
- und wobei die Klimatisierungsvorrichtung (30) einen Luft-Wärmetauscher (60) umfasst, der so angeschlossen ist, dass Wärme ausgetauscht wird zwischen einem ersten Luftstrom von der ersten Luft-Zuführung (38) zur Abluft-Abführung (18) und einem zweiten Luftstrom von der Frischluft-Zuführung (34),
- und wobei die Klimatisierungsvorrichtung so ausgebildet und angeschlossen ist, dass der zweite Luftstrom mit Luft (46) aus der zweiten Luft-Zuführung gemischt und in den zweiten Innenbereich (12a) der Kabine (12) abgegeben wird,
- wobei die Abluft-Abführung entweder eine zentrale Abluft-Abführung (20) ist oder eine zu einer Ausblasvorrichtung (20) für Abluft auf der Außenseite führende Abluft-Abführung (18) durch die Außenwand (14).

2. Klimatisierungssystem gemäß Anspruch 1, bei dem
- an der Klimatisierungsvorrichtung (30), der Abluft-Abführung (18) und/oder der Ausblasvorrichtung (20) mindestens ein Abluftgebläse (19) vorgesehen ist.

3. Klimatisierungssystem gemäß einem der vorangehenden Ansprüche, bei dem der zweite Innenbereich (12a) der Kabine (12) ein Hauptbereich und der erste Innenbereich (12b) der Kabine (12) eine hiervon abgetrennte Nasszelle ist,
- wobei die Nasszelle (12b) im Abstand von der Außenwand (14) angeordnet und durch eine Innenwand (26) von einem Gang (24) getrennt ist, von dem eine Tür zum Hauptbereich (12a) der Kabine (12) abgeht,
- wobei die Klimatisierungsvorrichtung (30) angeordnet ist im Bereich der Innenwand (26) zwischen der Nasszelle (12b) und dem Gang (24),
- und wobei als Frischluft-Zuführung ein Luftkanal (32) von der Außenwand (14) zur Klimatisierungsvorrichtung (30) vorgesehen ist
- und wobei als Abluft-Abführung ein Luftkanal (18) von der Klimatisierungsvorrichtung (30) zur Außenwand (14) vorgesehen ist.

4. Klimatisierungssystem gemäß Anspruch 3, bei dem
- die Klimatisierungsvorrichtung (30) eine vom Gang (24) zugängliche, abnehmbare Abdeckung für Service-Arbeiten aufweist.

5. Klimatisierungssystem gemäß einem der vorangehenden Ansprüche, bei dem
- die zweite Luft-Zuführung als Luftkanal am oder unter dem Boden des ersten und/oder des zweiten Innenbereichs (12a, 12b) der Kabine (12) ausgebildet ist.

6. Klimatisierungssystem gemäß einem der vorangehenden Ansprüche, bei dem
- bei Abgabe des gemischten Luftstroms (48) in den zweiten Innenbereich (12a) ein Luftkanal (42) von einer Oberseite der Klimatisierungsvorrichtung (30) an oder über der Decke des ersten und/oder des zweiten Innenbereichs (12a, 12b) der Kabine (12) vorgesehen ist.

7. Klimatisierungsvorrichtung, insbesondere für ein Klimatisierungssystem gemäß einem der vorangehenden Ansprüche, mit
- einer Frischluft-Zuführung (34) und einer Abluft-Abführung (36), sowie
- einer ersten und zweiten Luft-Zuführung (38) und einer Zuluft-Abführung (40),
- sowie einem Luft-Wärmetauscher (60) zum Wärme-Austausch zwischen einem ersten Luftstrom von der ersten Luft-Zuführung (38) zur Abluft-Abführung (36) und einem zweiten Luftstrom von der Frischluft-Zuführung (34),
- und einem Mischbereich (70), in dem der zweite Luftstrom mit Luft aus der zweiten Luft-Zuführung zur Abgabe über die Zuluft-Abführung (40) gemischt wird.

8. Klimatisierungsvorrichtung gemäß Anspruch 7, ferner umfassend
- ein Abluft-Gebläse (19).

9. Klimatisierungsvorrichtung gemäß Anspruch 7 oder 8, bei der
- der Luft-Wärmetauscher (60) ausgebildet ist zum Austausch von Wärme und Feuchtigkeit zwischen dem ersten und dem zweiten Luftstrom.

10. Klimatisierungsvorrichtung gemäß einem der Ansprüche 7-9, bei der
- ein erstes Gebläse (62) zur Förderung des zweiten Luftstroms und ein zweites Gebläse (66) zur Förderung der Zuluft in Reihe zueinander angeordnet sind,
- wobei die Förderrate des zweiten Gebläses (66) größer ist als die Förderrate des ersten Gebläses (62).

11. Klimatisierungsvorrichtung gemäß einem der Ansprüche 7 bis 10, bei der
- eine Kühleinheit (64) zur Kühlung des Misch-Luftstroms aus dem zweiten Luftstrom und der Luft (46) aus der zweiten Luft-Zuführung vorgesehen ist.

12. Klimatisierungsvorrichtung gemäß Anspruch 11, bei der
- die Kühleinheit (64) flüssigkeitsdurchflossene Leitungsabschnitte (76) aufweist, die im Misch-Luftstrom angeordnet sind,
- und die Kühleinheit (64) mindestens ein Kühlregister (82, 84) mit einer Mehrzahl von parallel angeordneten Leitungsabschnitten (76) aufweist,
- wobei die Leitungsabschnitte (76) zu mindestens einer durchgehenden Leitung miteinander verbunden sind,
- und wobei die Leitungsabschnitte (76) durch eine Halterung (80) relativ zueinander gehalten sind.

13. Klimatisierungsvorrichtung gemäß Anspruch 12, bei der
- ein erstes und ein zweites Kühlregister (82, 84) hintereinander im Misch-Luftstrom angeordnet sind,
- wobei die Kühlregister (82, 84) quer in einem vom Misch-Luftstrom durchströmten Bereich angeordnet sind.

14. Klimatisierungsvorrichtung gemäß einem der Ansprüche 10 bis 13, bei der
- die Kühleinheit (64) flüssigkeitsdurchflossene Leitungsabschnitte (76) aufweist, die so verbunden und angeschlossen sind, dass sie im Gegenstrom zum Misch-Luftstrom von einer Kühlflüssigkeit durchströmt werden.

15. Verfahren zur Klimatisierung von Schiffskabinen, bei dem
- einer Klimatisierungsvorrichtung (30) ein erster Luftstrom aus einem ersten Innenbereich (12b) einer Kabine (12) zugeführt und entweder durch eine Abluft-Abführung (18) durch eine Außenwand (14) zu einer Abluft-Ausblasvorrichtung (20) auf der Außenseite oder durch eine zentrale Abluft-Abführung (20) zentral nach außen abgeführt wird,
- wobei der Klimatisierungsvorrichtung (30) Sekundärluft (46) aus einem zweiten Innenbereich (12a) der Kabine (12) zugeführt wird,
- und Außenluft (16) angesaugt und durch eine Frischluft-Luftführung (32) durch die Außenwand (14) als zweiter Luftstrom der Klimatisierungsvorrichtung (30) zugeführt wird,
- wobei zwischen dem ersten Luftstrom und dem zweiten Luftstrom durch einen Luft-Wärmetauscher (60) Wärme ausgetauscht wird,
- und wobei die Sekundärluft (46) aus dem zweiten Innenbereich (12a) der Kabine (12) mit dem zweiten Luftstrom gemischt und in den zweiten Innenbereich (12a) der Kabine (12) abgegeben wird.
